# EUROPEAN PATENT APPLICATION

(11) **EP 1 477 265 A1**
(43) Date of publication of application: **17.11.2004**
(21) Application number: 04076455.7
(22) Date of filing: 14.05.2004
(51) Int. Cl.: B23K 26/14, H01L 21/20

(54) **Laser beam processing machine**

(30) Priority: 16.05.2003 JP 2003139437
(71) Applicant: Disco Corporation, Ota-ku, Tokyo 144-8650 (JP)
(72) Inventor: Morikazu, Hiroshi, Ota-ku Tokyo 144-8650 (JP); Koma, Yutaka, Ota-ku Tokyo 144-8650 (JP)
(74) Representative: Ryan, Anne Mary

(57) **Abstract**

A laser beam processing machine comprising a chuck table (36) having a holding surface for holding a workpiece (10) and a laser beam application means having a condenser (110) for applying a laser beam to the workpiece (10) held on the chuck table (36), wherein
the machine further comprises (i) a cover member (120) which is arranged around the condenser (110) and has a suction port (125) at a position where a laser beam radiated from the condenser (110) passes and an exhaust port (128) in its body portion (122) and (ii) a suction means which is connected to the exhaust port (128) of the cover member (120) and sucks a gas produced by laser beam processing through the suction port (125); and
the cover member (120) is provided with a spiral flow generating means for giving a spiral flow (cyclone, vortex) to the gas sucked through the suction port (125), said means comprising a spiral groove.

## Description

### Field of the Invention

The present invention relates to a laser beam processing machine for carrying out predetermined processing by applying a laser beam to a workpiece.

### Description of the Prior Art

Laser beam processing for carrying out predetermined processing by applying a laser beam to a workpiece is a method for melt-cutting the workpiece locally and instantly by focalizing a laser beam that is a high-density energy heat source, on the workpiece, and it has an advantage that the workpiece can be processed finely and very accurately. Therefore, in recent years, use of laser beam processing for semiconductor wafers and other electronic materials is also under study. For example, cutting by laser beam processing is under study, though dicing processing for dividing a semiconductor wafer into individual semiconductor chips is generally carried out by a cutting machine using a cutting blade.

As one of the laser beam processing methods for cutting a workpiece by applying a laser beam to it, there is a processing method called "laser ablation". This laser ablation is a phenomenon that when a pulse laser beam is applied to the surface of a material such as a polymer or the like at a high energy density, bond between molecules or atoms constituting the material is instantaneously broken, and the surface of the material is removed explosively through decomposition, gasification and transpiration. Not only polymers but also various types of materials such as ceramics, glass, metals and semiconductors can be cut sharply by this laser ablation without thermally damaging an area around a point to be processed.

In the laser ablation for gasifying and transpiring the workpiece locally, however, problems remain that it is difficult to gasify the entire area exposed to a laser beam of the workpiece, and that a molten and scattered material produced by application of the laser beam remains as debris. When such debris are scattered to an area around the work area and adhered to the circuit-formed surface of a semiconductor wafer as the workpiece, they cause a defective product.

In the laser ablation, there is also employed a technique to supply an assist gas such as sulfur hexafluoride or the like to the work area in order to promote an ablation reaction. However, the above debris cannot be removed completely by use of the assist gas. As a measure to eliminate such problems as scattering and adherence of debris, JP-A 9-192870 (the term "JP-A" as used herein means an "unexamined published Japanese patent application") discloses a technology in which a nozzle surrounding the condenser of a laser beam processing head and a guard member surrounding the nozzle are arranged to eject an assist gas into a work area through the nozzle and the assist gas ejected into a work area to promote the above ablation reaction is caused to be sucked out from the outside of the guard member.

However, even when the assist gas is ejected into the work area through the nozzle to blow off and float debris produced in the work area and the floating debris are sucked together with the assist gas from the outside of the above guard member as disclosed in the above publication, all the debris blown off do not always float, and some of them adhere to the workpiece again soon in many cases. As such debris having adhered to the workpiece again are firmly fixed to the workpiece due to cooling, they cannot be removed easily. Consequently, it was difficult to remove the debris having adhered to the workpiece again even by increasing suction power for sucking it from the outside of the above guard member.

### Summary of the Invention

It is an object of the present invention to provide a laser beam processing machine capable of preventing debris produced by applying a laser beam to a workpiece from adhering to the workpiece again.

According to the present invention, firstly, the above object is attained by a laser beam processing machine comprising a chuck table having a holding surface for holding a workpiece, a laser beam application means having a condenser for applying a laser beam to the workpiece held on the chuck table, and a feed means for moving the chuck table and the laser beam application means in a feed direction relative to each other, wherein
the machine further comprises (1) a cover member which is arranged around the condenser and has a suction port at a position where a laser beam from the condenser passes and an exhaust port in its body portion and (2) a suction means which is connected to the exhaust port of the cover member and sucks a gas produced at a time of laser beam processing through the suction port; and
the cover member is provided with a spiral flow generating means for giving a spiral flow to the gas sucked through the suction port.

According to the present invention, secondly, the above object is attained by a laser beam processing machine comprising a chuck table having a holding surface for holding a workpiece, a laser beam application means having a condenser for applying a laser beam to the workpiece held on the chuck table, and a feed means for moving the chuck table and the laser beam application means in a feed direction relative to each other, wherein
the machine further comprises (1) a cover member which is arranged around the condenser and has a suction port at a position where a laser beam radiated from the condenser passes and an exhaust port in its body portion, (2) a guard member which is arranged around the cover member and has an assist gas feed port in its body portion, (3) an assist gas supply means which is connected to the assist gas feed port of the guard member and supplies an assist gas into a space formed by the guard member and the cover member, and (4) a suction means which is connected to the exhaust port of the cover member and sucks the assist gas and a gas produced at the time of laser beam processing through the suction port; and
the cover member is provided with a spiral flow generating means for giving a spiral flow to the gas sucked through the suction port.

The above spiral flow generating means comprises a spiral groove which is formed in the end face, to which the suction port is open, of the cover member to surround the edge of the outer periphery of the suction port and a straight groove which communicates with the spiral groove and reaches the edge of the outer periphery of the end face. This straight groove is formed in a direction substantially perpendicular to the feed direction.

### Brief Description of the Drawings

Fig. 1 is a perspective view of a laser beam processing machine constituted in accordance with an embodiment of the present invention;
Fig. 2 is a sectional view of a laser beam processing head mounted to the laser beam processing machine shown in Fig. 1;
Fig. 3(a) is a bottom view of a cover member constituting the laser beam processing head shown in Fig. 2;
Fig. 3(b) is a partially enlarged view of the center portion of the cover member shown in Fig. 3(a);
Fig. 4 is a diagram showing a state of laser beam processing being carried out by the laser beam processing machine shown in Fig. 1;
Fig. 5 is a diagram showing a state of a gas flowing into the inside of the cover member constituting the laser beam processing head at the time of laser beam processing in the laser beam processing machine shown in Fig. 1;
Fig. 6 is a perspective view of a semiconductor wafer as a workpiece to be processed by the laser beam processing machine of the present invention;
Fig. 7(A), 7(B) and 7(C) are photos showing each contamination states of processed grooves and therearound as the results of experiments on the laser beam processing of a semiconductor wafer as a workpiece; and
Fig. 8 is a sectional view of a laser beam processing head according to another embodiment of the present invention.

### Detailed Description of the Preferred Embodiments

A laser beam processing machine constituted in accordance with a preferred embodiment of the present invention will be described in more detail with reference to the accompanying drawings hereinafter.

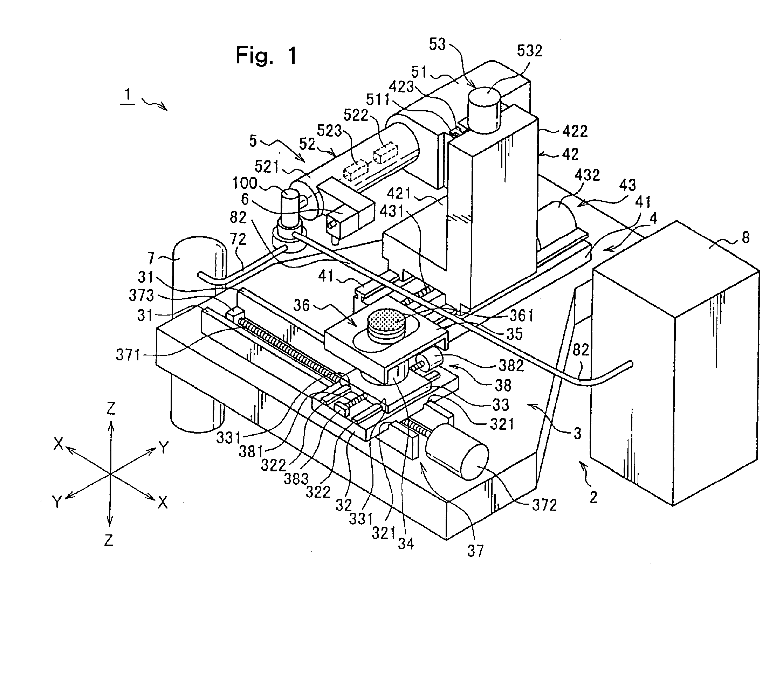

Fig. 1 is a perspective view of a laser beam processing machine constituted in accordance with the present invention. The laser beam processing machine 1 shown in Fig. 1 comprises a stationary base 2, a chuck table unit 3 for holding a workpiece, which is mounted on the stationary base 2 in such a manner that it can move in a feed direction indicated by an arrow X, a laser beam application unit support mechanism 4 mounted on the stationary base 2 in such a manner that it can move in an indexing direction indicated by an arrow Y perpendicular to the feed direction indicated by the arrow X, and a laser beam application unit 5 mounted on the laser beam application unit support mechanism 4 in such a manner that it can move in a direction indicated by an arrow Z. The laser beam processing machine 1 in the illustrated embodiment has an assist gas supply means 7 and a suction means 8.

The above chuck table unit 3 comprises a pair of guide rails 31 and 31 mounted on the stationary base 2 and arranged in parallel to each other in the feed direction indicated by the arrow X, a first sliding block 32 mounted on the guide rails 31 and 31 in such a manner that it can move in the direction indicated by the arrow X, a second sliding block 33 mounted on the first sliding block 32 in such a manner that it can move in the direction indicated by the arrow Y, a support table 35 supported on the second sliding block 33 by a cylindrical member 34, and a chuck table 36 as a workpiece holding means. This chuck table 36 comprises an adsorption chuck 361 made of a porous material so that a disk-like semiconductor wafer as a workpiece is held on the top surface (i.e., workpiece holding surface) of the adsorption chuck 361 by a suction means that is not shown. The chuck table 36 is rotated by a pulse motor (not shown) arranged in the cylindrical member 34.

The above first sliding block 32 has, on the under surface thereof, a pair of to-be-guided grooves 321 and 321 to be fitted to the above pair of guide rails 31 and 31 and has, on the top surface thereof, a pair of guide rails 322 and 322 formed parallel to each other in the indexing direction indicated by the arrow Y. The first sliding block 32 constituted as described above is so constituted as to be moved in the feed direction indicated by the arrow X along the pair of guide rails 31 and 31 by fitting the to-be-guided grooves 321 and 321 onto the pair of guide rails 31 and 31, respectively. The chuck table unit 3 in the illustrated embodiment is provided with a feed means 37 for moving the first sliding block 32 along the pair of guide rails 31 and 31 in the feed direction indicated by the arrow X. The feed means 37 comprises a male screw rod 371 arranged between the above pair of guide rails 31 and 31 and in parallel thereto, and a drive source such as a pulse motor 372 for rotary-driving the male screw rod 371. The male screw rod 371 is, at its one end, rotatably supported to a bearing block 373 fixed on the above stationary base 2 and is, at the other end, transmission-coupled to the output shaft of the above pulse motor 372 by a speed reducer that is not shown. The male screw rod 371 is screwed into a threaded through-hole formed in a female screw block (not shown) projecting from the under surface of the center portion of the first sliding block 32. Therefore, by driving the male screw rod 371 in a normal direction or a reverse direction by the pulse motor 372, the first sliding block 32 is moved along the guide rails 31 and 31 in the feed direction indicated by the arrow X.

The above second sliding block 33 has, on the under surface thereof, a pair of to-be-guided grooves 331 and 331 to be fitted to the pair of guide rails 322 and 322 provided on the top surface of the above first sliding block 32, and is so constituted as to be moved in the indexing direction indicated by the arrow Y by fitting the to-be-guided grooves 331 and 331 onto the pair of guide rails 322 and 322, respectively. The chuck table unit 3 in the illustrated embodiment is provided with a first indexing means 38 for moving the second sliding block 33 in the indexing direction indicated by the arrow Y along the pair of guide rails 322 and 322 provided on the first sliding block 32. The first indexing means 38 comprises a male screw rod 381 arranged between the above pair of guide rails 322 and 322 and in parallel thereto and a drive source such as a pulse motor 382 for rotary-driving the male screw rod 381. The male screw rod 381 is, at its one end, rotatably supported to a bearing block 383 fixed on the top surface of the above first sliding block 32 and is, at the other end, transmission-coupled to the output shaft of the above pulse motor 382 by a speed reducer that is not shown. The male screw rod 381 is screwed into a threaded through-hole formed in a female screw block (not shown) projecting from the under surface of the center portion of the second sliding block 33. Therefore, by driving the male screw rod 381 in a normal direction or a reverse direction by the pulse motor 382, the second sliding block 33 is moved along the guide rails 322 and 322 in the indexing direction indicated by the arrow Y.

The above laser beam application unit support mechanism 4 has a pair of guide rails 41 and 41 arranged, on the stationary base 2, in parallel along the indexing direction indicated by the arrow Y and a movable support base 42 arranged on the guide rails 41 and 41 in such a manner that it can move in the indexing direction indicated by the arrow Y. This movable support base 42 comprises a movable support portion 421 movably mounted on the guide rails 41 and 41 and a mounting portion 422 mounted on the movable support portion 421. The mounting portion 422 has, on one side surface, a pair of guide rails 423 and 423 extending in the direction indicated by the arrow Z. The laser beam application unit support mechanism 4 in the illustrated embodiment is provided with a second indexing means 43 for moving the movable support base 42 along the pair of guide rails 41 and 41 in the indexing direction indicated by the arrow Y. This second indexing means 43 comprises a male screw rod 431 arranged between the above pair of guide rails 41 and 41 and in parallel thereto and a drive source such as a pulse motor 432 for rotary-driving the male screw rod 431. The male screw rod 431 is, at its one end, rotatably supported to a bearing block (not shown) fixed on the above stationary base 2 and is, at the other end, transmission-coupled to the output shaft of the above pulse motor 432 by a speed reducer that is not shown. The male screw rod 431 is screwed into a threaded through-hole formed in a female screw block (not shown) projecting from the under surface of the center portion of the movable support portion 421 constituting the movable support base 42. Therefore, by driving the male screw rod 431 in a normal direction or a reverse direction by the pulse motor 432, the movable support base 42 is moved along the guide rails 41 and 41 in the indexing direction indicated by the arrow Y.

The laser beam application unit 5 in the illustrated embodiment comprises a unit holder 51 and a laser beam application means 52 secured to the unit holder 51. The unit holder 51 is provided with a pair of to-be-guided grooves 511 and 511 to be slidably fitted to the pair of guide rails 423 and 423 provided on the above mounting portion 422, and is supported in such a manner that it can move in the direction indicated by the arrow Z by fitting the to-be-guided grooves 511 and 511 onto the above guide rails 423 and 423, respectively.

The illustrated laser beam application means 52 comprises a cylindrical casing 521 that is secured to the above unit holder 51 and extends substantially horizontally, a laser beam oscillator 522 and a laser beam modulator 523 both of which are installed in the casing 521, and has a laser beam processing head 100 attached to the end of the casing 521.

For example, a YAG laser oscillator may be used as the laser beam oscillator 522. The peak output of a Nd:YAG laser beam oscillated from this laser beam oscillator 522 is, for example, 0.5 to 5 kW (Max) and the average output of the laser beam is, for example, 20 to 180 mW. A laser beam oscillated from this laser beam oscillator 522 is guided to the laser beam processing head 100 through the laser beam modulator 523. The laser beam modulator 523 comprises a repetition frequency setting means (not shown), a laser beam pulse width setting means (not shown) and a laser beam wavelength setting means (not shown) to modulate a laser beam oscillated by the laser beam oscillator 522. Stated more specifically, the repetition frequency setting means constituting the laser beam modulator 523 modulates the laser beam to a pulse laser beam having a predetermined repetition frequency (for example, 1 kHz), the laser beam pulse width setting means constituting the laser beam modulator 523 sets the pulse width of the pulse laser beam to a predetermined width (for example, 30 nsec), and the laser beam wavelength setting means constituting the laser beam modulator 523 sets the wavelength of the pulse laser beam to a predetermined value (for example, 532 nm).

The above laser beam processing head 100 converges rays of the pulse laser beam that has been oscillated from the above laser beam oscillator 522 and modulated by the laser beam modulator 523 as described above, and applies the obtained beam to the workpiece held on the above chuck table. This laser beam processing head 100 will be described in detail later on.

An image pick-up means 6 is arranged at a front end of the casing 521 constituting the above laser beam application means 52. This image pick-up means 6 in the illustrated embodiment is constituted by an ordinary image pick-up device (CCD) for picking up an image with visible radiation and an infrared CCD for picking up an image with infrared radiation, either of which can be suitably selected. The image pick-up means 6 further comprises an illuminating means for illuminating the workpiece and an optical system for capturing an area illuminated by the illuminating means. An image taken by the optical system is transmitted to the image pick-up device (CCD or infrared CCD) to be converted into an electrical image signal, which is then sent to a control means that is not shown.

The laser beam application unit 5 in the illustrated embodiment comprises a moving means 53 for moving the unit holder 51 along the pair of guide rails 423 and 423 in the direction indicated by the arrow Z. Like the aforementioned moving means, the moving means 53 comprises a male screw rod (not shown) arranged between the pair of guide rails 423 and 423 and a drive source such as a pulse motor 532 for rotary-driving the male screw rod. By driving the male screw rod (not shown) in a normal direction or a reverse direction by the pulse motor 532, the unit holder 51 and the laser beam application means 52 are moved along the guide rails 423 and 423 in the direction indicated by the arrow Z.

The above assist gas supply means 7 comprises a bomb for storing an assist gas for promoting a laser ablation reaction and a pressure control means for delivering the assist gas stored in the bomb at a predetermined feed pressure, and the assist gas is supplied to the work area to be described later through a flexible feed pipe 72 at a feed rate of 3.0 liters/min, for example. Sulfur hexafluoride (SF₆), carbonyl fluoride (COF₂) or nitrogen trifluoride (NF₃) may be used as the assist gas.

The above suction means 8 is composed of a vacuum pump that is capable of sucking at a predetermined pressure, and sucks and discharges the above assist gas supplied to the work area and the debris produced at the time of laser beam processing through a flexible exhaust pipe 82. The discharge amount of this suction means 8 is set to 30 liters/min, for example, and it is desirably to set 10 times or more than the amount of the assist gas supplied by the above assist gas supply means 7.

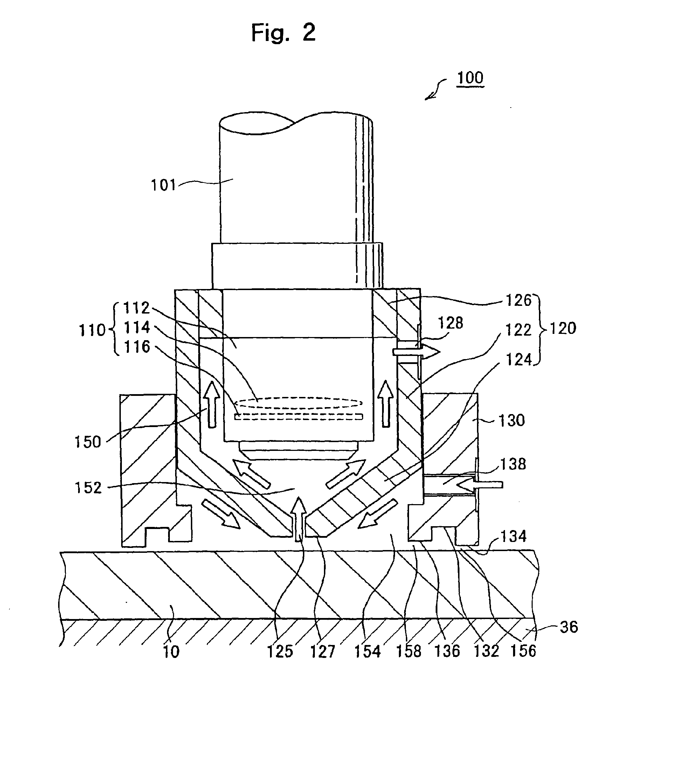

A description is subsequently given of the above laser beam processing head 100 with reference to Fig. 2.

The laser beam processing head 100 locates above the chuck table 36 positioned in the work area. This laser beam processing head 100 comprises a condenser 110 for converging rays of pulse laser beam that is oscillated by the above laser beam oscillator 522 and modulated by the laser beam modulator 523, a cover member 120 arranged surrounding the condenser 110, and a guard member 130 arranged surrounding a cover member 120.

The condenser 110 has a cylindrical lens case 112, and an objective condenser lens 114 and a protective glass 116, which are installed in the lens case 112. The lens case 112 in the illustrated embodiment has an inner diameter of 20 mm and an outer diameter of 32 mm, and is mounted on the lower end of the body case 101 of the laser beam processing head 100. The objective condenser lens 114 in the illustrated embodiment has a diameter of 20 mm, a focusing spot diameter of 10 µm, a focusing distance of 25 mm and a working distance of 20 mm. The protective glass 116 is arranged on the under side in the drawing (on the chuck table side) of the objective condenser lens 114 to protect the objective condenser lens 114 from a scattered material produced by processing.

The condenser 110 constituted as described above is equipped with the cover member 120 surrounding the condenser 110. This cover member 120 is made of a synthetic resin or metal material, and has a cylindrical body portion 122, a tapered portion 124 which is tapered downward from the end (lower end in Fig. 2) of the body portion 122, and a spacer 126, which is arranged between the upper end portion of the body portion 122 and the outer wall of the lens case 112 and fixes the body portion 122 to the lens case 112. This cover member 120 has an outer diameter of 52 mm and a height of 54 mm.

The cylindrical body portion 122 has an inner diameter of, for example, 42 mm, which is larger than the outer diameter (for example, 32 mm) of the lens case 112 of the above condenser 110, and is arranged to surround most of the lens case 112. Therefore, a space 150 is formed between the inner wall of the body portion 122 and the outer wall of the lens case 112. An exhaust port 128 that is open to the above space 150 and the outer wall is formed in the upper part of the body portion 122. This exhaust port 128 is connected to the exhaust pipe 82 of the above suction means 8.

The above tapered portion 124 is arranged to surround the lower part in Fig. 2 of the lens case 112. Therefore, a space 152 which communicates with the above space 150 is formed between the inner wall of the tapered portion 124 and the lens case 112. The end face 127 (lower end face in Fig. 2) of the tapered portion 124 is formed parallel to the top surface (workpiece holding surface) of the chuck table 36. Therefore, even when the condenser 110 is lowered to bring the cover member 120 to a position closest to the front surface of the workpiece 10 held on the chuck table 36, the end face 127 and the front surface of the workpiece 10 can be opposed to each other at a slight distance (for example, several millimeters) therebetween over a relatively large area. A suction port 125 that is open to the above space 152 and the end face 127 is formed, in the end of the tapered portion 124, at the center portion, that is, at a position where a laser beam applied from the above condenser 110 passes. This suction port 125 has a diameter of about 3 mm and is situated on the optical axis of a laser beam applied from the condenser 110.

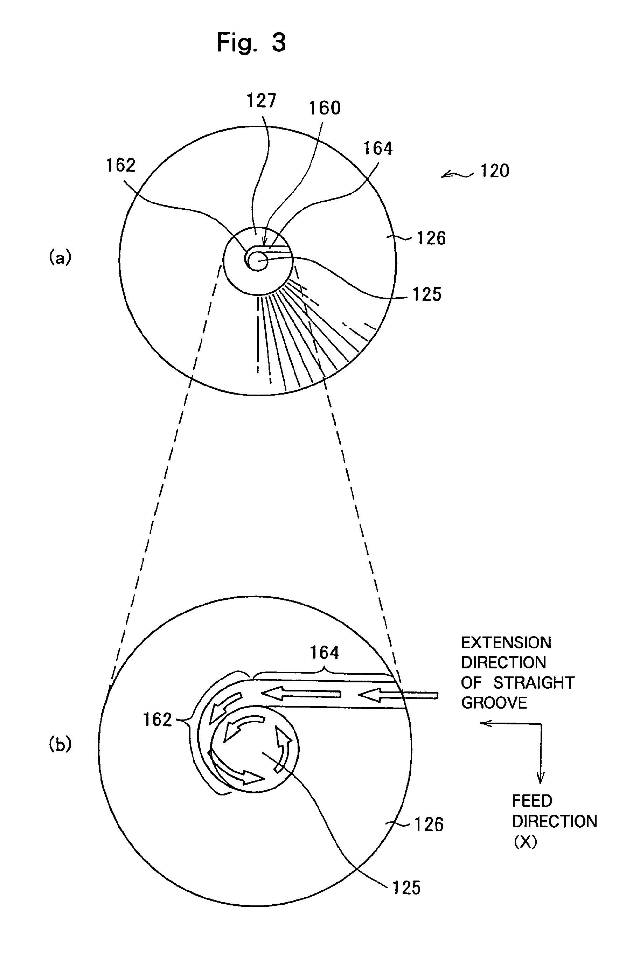

As shown in Fig. 3(a) and Fig. 3(b), a spiral flow generating means composed of a suction groove 160 which communicates with the above suction port 125 is formed in the end face 127 of the tapered portion 124. Fig. 3(a) is a bottom view of the cover member 120 and Fig. 3(b) is an enlarged view of the end face of the tapered portion 124 of the cover member 120 shown in Fig. 3 (a). The suction groove 160 as the spiral flow generating means is composed of a spiral groove 162 that communicates with the suction port 125 and a straight groove 164 that connects between the edge of the outer periphery of the end face 127 and the spiral groove 162. The spiral groove 162 is the groove of an inside tangential type cyclone formed to surround about half round of the outer periphery of the suction port 125. This spiral groove 162 has, for example, a width of 1 mm and a depth of the deepest portion of 2 mm at a position where it is connected to the straight groove 164. The spiral groove 162 becomes gradually narrower as it recedes from its connection portion with the straight groove 164 toward the suction port 125 and disappears completely in the suction port 125 at a position where it reaches nearly half way round of the outer periphery of the suction port 125. The thus formed spiral groove 162 serves to cause an assist gas (to be later described) flown through the straight groove 164 to be revolved and converted into a swirl, and to introduce it into the suction port 125. The inside tangential type cyclone has a structure that the straight groove 164 is situated on an outer side in the tangential direction of the suction port 125. In contrast to this, an outside tangential type cyclone has a structure that the straight groove 164 is situated on an inner side in the tangential direction of the suction port 125. It is desired that the groove formed near the suction port 125 should be of an inside tangential type cyclone in order to obtain revolving force but may be of an outside tangential type cyclone.

The straight groove 164 communicating with the spiral groove 162 has, for example, a width of 1 mm and a depth of the deepest portion of 2 mm, and guides the assist gas to be described later to the spiral groove 162. The sectional form of the straight groove 164 may be rectangular, V-shaped, U-shaped and so on. This straight groove 164 serves to introduce the assist gas into the suction port 125 smoothly. That is, to enhance the effect of sucking the assist gas and the debris produced at the time of laser beam processing, the end face 127 of the tapered portion 124 constituting the cover member 120 must be brought very close to the front surface of the workpiece. However, when the end face 127 and the surface of the workpiece are brought too close to each other, a loss of pressure between them becomes large and a suction force decreases, whereby the assist gas becomes hardly flow. Accordingly, by forming the straight groove 164 that connects the spiral groove 261 with the outside, this straight groove 164 functions as the passage of the assist gas so that the assist gas can flow into the suction port 125 through the spiral groove 162 smoothly. The extension direction of the straight groove 164 is desirably a direction substantially perpendicular to the feed direction X of the chuck table 36 at the time of laser beam processing. It has been verified in experiments that by setting the extension direction of the straight groove 164 as described above, the assist gas is allowed to flow into the suction port 125 smoothly and the debris produced at the time of laser beam processing can be sucked effectively.

Returning to Fig. 2, the above spacer 126 is formed in a ring-form having an inner diameter corresponding to the outer diameter of the lens case 112 of the above condenser 110 and an outer diameter corresponding to the inner diameter of the above body portion 122, and serves to connect the body portion 122 to the lens case 112. The spacer 126 may be integrated with the body portion 122.

The guard member 130 installed on the above cover member 120 is cylindrical and detachably mounted to the lower part of the body portion 122 of the cover member 120. The mounting position to the cover member 120 of the guard member 130 is adjusted to ensure that the end face (lower end face in Fig. 2) of the guard member 130 is the same or slightly lower than the end face 127 of the above cover member 120, that is, a position close to the chuck table 36. A space 154 is thus formed between the guard member 130 installed on the cover member 120 and the tapered portion 124 of the cover member 120. An assist gas feed port 138 that is open to the outer wall and the above space 154 is formed in the body portion in the axial direction of the guard member 130. This assist gas feed port 133 is connected to the feed pipe 72 of the above assist gas supply means 7. Therefore, the assist gas is supplied into the space 154 from the assist gas supply means 7 through the assist gas feed port 138.

An annular gas-collecting groove 132 is formed in the end face of the guard member 130. The outer end face 134 that locates on the outer side than the annular gas-collecting groove 132 of the end face of the guard member 130 is lower than the inner end face 136 that locates on the inner side than the annular gas-collecting groove 132, that is, locates close to the chuck table 36. Therefore, a gap 156 between the outer end face 134 and the front surface of the workpiece 10 held on the chuck table is narrower than a gap 158 between the inner end face 136 and the front surface of the workpiece 10 held on the chuck table. Consequently, the gas in the annular gas-collecting groove 132 tends to flow toward the gap 158 but hardly toward the gap 156, thereby making it possible to prevent the gas from leaking to the outside from the gap 156. Further, as the gap 156 between the outer end face 134 and the surface of the workpiece 10 held on the chuck table is narrow, it is possible also to prevent the air from entering the space 154 which is an assist gas chamber.

A description is subsequently given of a flow of the assist gas supplied from the assist gas feed port 138 in the above guard member 130. The assist gas supplied from the above assist gas supply means 7 through the assist gas feed port 138 flows into the space 154 which becomes an assist gas chamber, from the outer periphery as shown by the arrow in Fig. 2. Meanwhile, since the gas existent in the space 150 and the space 152 formed by the cover member 120 and the lens case 112 is sucked by the above suction means, the assist gas flowing into the space 154 gathers together toward the work area which is the center portion, along the tapered portion 124 of the cover member 120, and is sucked into the above space 152 through the suction port 125 formed in the cover member 120. The assist gas sucked into the space 152 flows up into the above space 150 and is discharged from the exhaust port 128.

Since the assist gas flowing into the space 154 that is the assist gas chamber, from the outer periphery flows toward the work area as described above, it is possible to effectively prevent the debris produced by laser beam processing from being scattered to the circumference. As the assist gas gathering in the work area is sucked through the suction port 125 formed in the cover member 120 as described above, the debris produced by laser beam processing are also sucked through the suction port 125 together with a flow of the assist gas. On this occasion, since the lower end face 127, at which the suction port 125 is formed, of the cover member 120 is positioned in close proximity to the front surface of the workpiece 10 held on the chuck table, the debris produced right after laser beam processing can be sucked into the inside of the cover member 120 immediately. Thus, the debris can be effectively removed from the work area.

When the assist gas supplied into the work area is sucked into the inside of the cover member 120 through the suction port 125 as described above, the debris sucked together with the assist gas may adhere to the protective glass 116 of the condenser 110 to contaminate the protective glass 116 or intercept a laser beam applied from the condenser 110. In the illustrated embodiment, however, this problem can be solved by the function of the suction groove 160 as the spiral flow generating means formed in the end face 127 of the tapered portion 124 constituting the cover member 120.

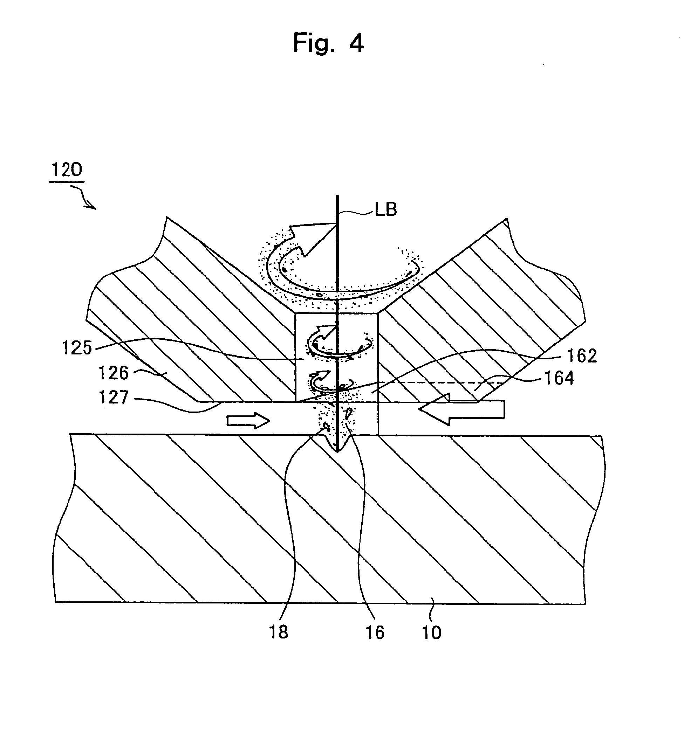

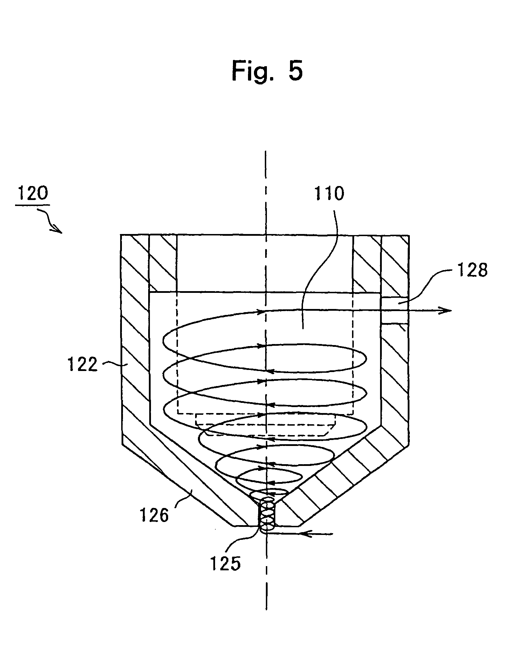

A description is subsequently given of the function of the above suction groove 160 at the time of sucking the above assist gas, with reference to Fig. 4 and Fig. 5. Fig. 4 is an enlarged sectional view of the work area of the cover member 120 and Fig. 5 is a diagram illustrating a state of the assist gas and the debris being sucked into the inside of the cover member 120.

As shown in Fig. 4, a laser beam LB from the above condenser 110 is focused on the workpiece 10 through the suction port 125 provided in the cover member 120. An ablation reaction is caused in the vicinity of the work point of the workpiece 10 by the high-density energy of thus applied laser beam to gasify the exposed spot of the workpiece 10 instantaneously and remove it explosively. Thereby, a gas 16 (silicon gas when the workpiece is a silicon wafer) is produced by the gasification of the workpiece 10 in the work point and therearound. However, all the workpiece is not always gasified to become the gas 16 by the application of a laser beam, and debris 18 are also produced from the workpiece molten by processing heat and scattered above the work point. The gas 16 and the debris 18 are unnecessary products produced by laser beam processing and must be removed from the work area including the work point as much as possible.

Meanwhile, during laser beam processing, the assist gas supply means 7 and the suction means 8 are in operation, the assist gas is supplied into the work area, and suction force for sucking the external atmosphere of the work area including the work point into the inside of the cover member 120 through the suction port 125 is also in action. The assist gas supplied into the space 154 formed by the guard member 130 and the cover member 120 is gathered together at a position near the work point by the above suction force. The assist gas thus reaching the position near the work point promotes the ablation reaction and suppresses the generation of the debris. Meanwhile, the assist gas flows into the suction port 125 through the suction groove 160 formed in the end face 127 of the tapered portion 124 constituting the cover member 120. The assist gas passing through the suction groove 160 has a spiral motion by being guided into the spiral groove 162 and flows, as a spiral flow, into the inside of the cover member 120 from the suction port 125. The assist gas that has thus flown, as a spiral flow, into the inside of the cover member keeps its spiral flow also in the cover member 120.

As a result, unnecessary products such as the gas 16 and the debris 18 floating near the work point are carried by the above spiral flow and sucked into the inside of the cover member 120 from the suction port 125 as well. The unnecessary products such as the assist gas and the debris 18 flowing into the inside of the cover member 120 go up along the inner wall of the tapered portion 124 constituting the cover member 120 while they are turned spirally with their revolution radius increasing gradually, further rise while they keep whirling along the inner wall of the body portion 122, and are discharged from the exhaust port 128. Since the unnecessary products such as the assist gas and the debris 18 sucked through the suction port 125 and the cover member 120 are given a whirling motion as described above, the heavy debris 18 are moved along the inner walls of the suction port 125 and the cover member 120 by centrifugal force. Therefore, the debris 18 sucked from the suction port 125 do not intercept a laser beam radiated from the condenser 110 and do not adhere to the protective glass 116 of the condenser 110.

At the time of the above laser beam processing, the discharge amount of the gas sucked and discharged by the suction means 8 is set to 10 times or more the supply of the assist gas supplied by the assist gas supply means 7. Therefore, the assist gas supplied into the inside of the guard member 130 does not leak to the outside through the gap 156 between the outer end face 134 and the surface of the workpiece 10 held on the chuck table. As the assist gas such as sulfur hexafluoride (SF₆) or the like is a toxic substance, when it leaks to the outside of the guard member 130, an operator and other persons may be harmed. Also, when a semiconductor wafer 10 contains a toxic substance such as gallium arsenide (GaAs) or the like, if a gas of the semiconductor wafer 10 gasified by the ablation reaction leaks to the outside of the guard member 130, the operator and other persons may be harmed. Therefore, it is important to prevent the assist gas supplied into the inside of the guard member 130 and the gas gasified by the ablation reaction from leaking to the outside of the guard member 130.

Next, a description is subsequently given of the method of cutting a semiconductor wafer as the workpiece using the above-described laser beam processing machine 1.

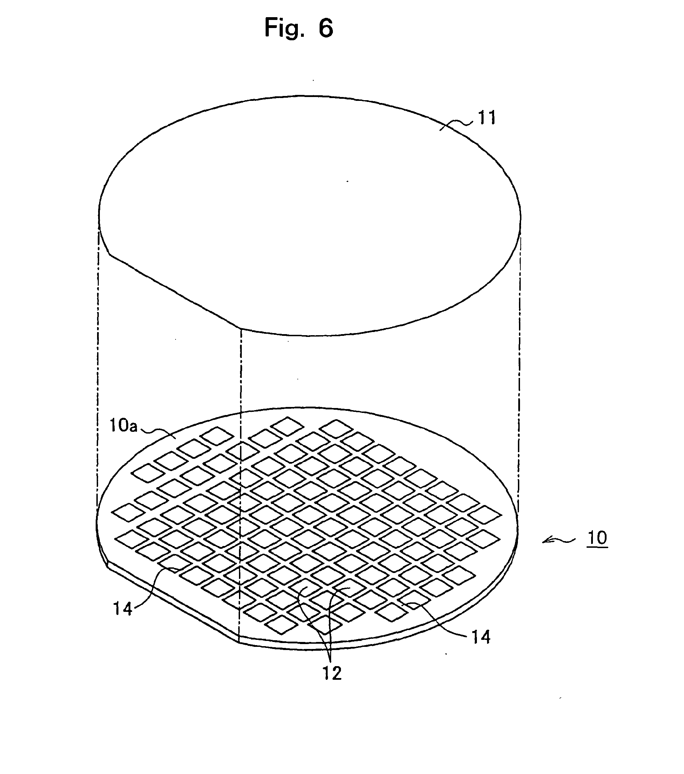

Fig. 6 shows a semiconductor wafer 10 as the workpiece. The semiconductor wafer 10 shown in Fig. 6 is formed of a semiconductive material such as silicon (Si) or gallium arsenide (GaAs). This semiconductor wafer 10 has a plurality of streets (cutting lines) formed in a lattice form on the front surface 10a to section a plurality of rectangular areas, and a circuit 12 such as IC or LSI is formed in each of the rectangular areas. Prior to laser beam processing of the thus formed semiconductor wafer 10, a protective tape 11 is affixed to the front surface 10a of the semiconductor wafer 10.

After the protective tape 11 is affixed to the front surface 10a of the semiconductor wafer 10, the semiconductor wafer 10 is placed on the adsorption chuck 361 of the chuck table 36 of the laser beam processing machine 1 shown in Fig. 1 in such a manner that its rear side faces up, and suction-held on the adsorption chuck 361. The chuck table 36 thus suction-holding the semiconductor wafer 10 is moved along the guide rails 31 and 31 by the feed means 37 and positioned right under the image pick-up means 6 mounted on the laser beam application unit 5.

After the chuck table 36 is positioned right under the image pick-up means 6, image processing such as pattern matching is carried out to align a street 14 formed on the semiconductor wafer 10 in a predetermined direction with the condenser 110 for applying a laser beam along the street 14 by the image pick-up means 6 and a control means that is not shown, thereby performing the alignment of a laser beam application position. Similarly, the alignment of the laser beam application position is also carried out for streets 14 extending in a direction perpendicular to the above predetermined direction and formed on the semiconductor wafer 10. On this occasion, although the street 14 formed on the front surface 10a of the semiconductor wafer 10 faces down, an image is picked up with infrared radiation by the image pick-up means 6 to carry out alignment from the rear surface.

After the street 14 formed on the semiconductor wafer 10 held on the chuck table 36 is detected and the alignment of the laser beam application position is carried out, the chuck table 36 is moved to a laser beam application range where the laser beam processing head 100 is located. The laser beam processing head 100 is lowered to bring the end face 127 of the cover member 120 fitted onto the condenser 110 to a position close to the work surface of the semiconductor wafer 10 as shown in Fig. 2. The closer the distance between the end face 127 of the cover member 120 and the semiconductor wafer 10 approaches zero, the higher effect of sucking unnecessary products such as debris and the like is obtained. However, when the end face 127 and the semiconductor wafer 10 come into contact with each other, the semiconductor wafer 10 is broken. Therefore, it is necessary to keep them not contact with each other. Consequently, the distance between the end face 127 of the cover member 120 and the work surface of the semiconductor wafer 10 is desirably 3 mm or less.

Next, the assist gas supply means 7 is operated to supply the assist gas into the work area including the work point, and while the suction means 8 is operated to suck the assist gas into the inside of the cover member 120 through the above suction port 125, a laser beam is continuously applied to the semiconductor wafer 10 from the condenser 110. At this time, the chuck table 36 holding the semiconductor wafer 10 is moved at a feed rate of 2 to 4 mm/sec (laser beam application step). The work conditions in this laser beam application step are set as follows, for example.
Light source: YAG laser
Wavelength: 532 nm
Peak power: 5 kW
Average power: 180 mW
Energy density: 31.8 J/cm²
Repetition frequency: 1 kHz
Pulse width: 30 ns
Focusing spot diameter: 10 µm

By carrying out the above laser beam application step, the above ablation reaction takes place, and processed grooves are formed along the streets 14 of the semiconductor wafer 10. The width of the processed groove can be adjusted by the diameter of the focusing spot of the laser beam. When the diameter of the focusing spot was 10 µm, the width of the processed groove was substantially 30µm. Further, the depth of the processed groove can be adjusted also by the feed rate, the output of the laser beam and the like. For example, when the feed rate was 2 mm/sec, the depth of the processed groove was substantially 20 µm and when the feed rate was 4 mm/sec, the depth of the processed groove was substantially 12µm. By adjusting the depth of this processed groove, the semiconductor wafer can be selected to be cut completely or to a desired depth.

In the above embodiment, there has been shown an example where the repetition frequency is 1 kHz and the feed rate is 2 to 4 mm/sec. Even when the repetition frequency is set to 100 kHz to increase the feed rate to 20 to 400 mm/sec, processed grooves having the above depth can be obtained.

After the laser beam application step is carried out along a predetermined street as described above, the chuck table 36, namely, the semiconductor wafer 10 held on the chuck table 36 is moved by a distance between adjacent streets in the direction indicated by the arrow Y in Fig. 1 (indexing step) to carry out the above laser beam application step. After the laser beam application step and indexing step are made on all the streets extending in the predetermined direction, the chuck table 36, namely, the semiconductor wafer 10 held on the chuck table 36 is turned at 90° to carry out the above laser beam application step and indexing step along streets extending in a direction perpendicular to the above predetermined direction, thereby dividing the semiconductor wafer 10 into individual semiconductor chips.

The results of experiments for observing unnecessary products such as debris and the like adhering to the work surface of the semiconductor wafer 10 after processing when the above laser beam processing has been carried out are described hereinbelow.

Experiments A, B and C were conducted under the following three conditions to confirm the unnecessary product sucking effect obtained by the suction means 8 and the ablation reaction effect of the assist gas (sulfur hexafluoride (SF₆)).

| | Sucking by suction means | Supply of assist gas |
|---|---|---|
| Experiment A | not done | not done |
| Experiment B | done | not done |
| Experiment C | done | done |

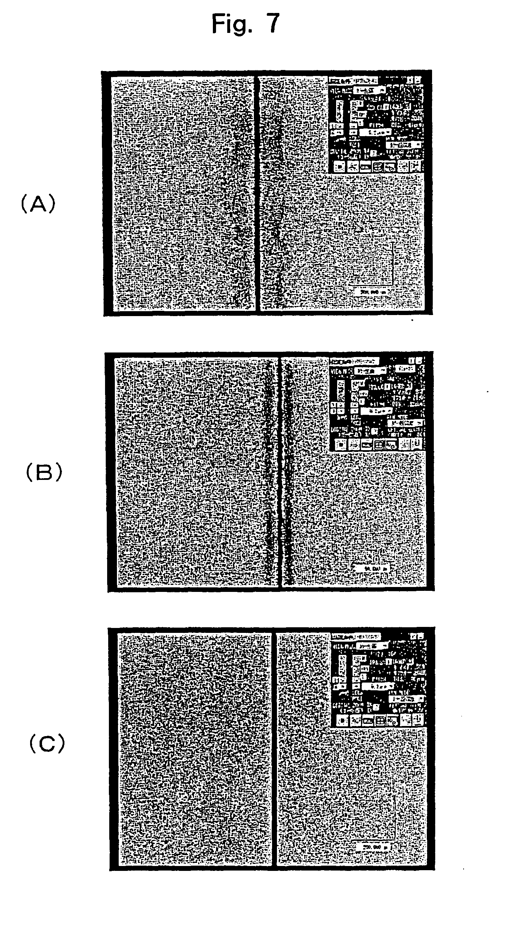

These experimental results are shown in Fig. 7. Fig. 7 are photos showing the contamination states of portions around the processed grooves of semiconductor wafers 10 subjected to laser beam processing in the experiments A, B and C.

As shown in Fig. 7(A), in the experiment A in which suction was not carried out by the suction means 8 and the assist gas was not supplied, a portion around the processed groove was contaminated the most. A large amount of debris adhered to both sides of the processed groove over a relatively wide area and a relatively wide interference film (oxide film) remained. The debris and the interference film could not be removed even by cleaning the semiconductor wafer 10.

As shown in Fig. 7 (B) , in experiment B in which suction was carried out by suction means 8 and the assist gas was not supplied, the contamination of only a portion near the processed groove was observed, and the contaminated area was about half that of the experiment A. However, a relatively narrow interference film remained on both sides of the processed groove.

As shown in Fig. 7 (C) , in experiment C in which suction by the suction means 8 and the supply of the assist gas were carried out, a portion around the processed groove was hardly contaminated, and debris and an interference film could rarely be observed.

As described above, it has been found that by sucking the gas by the suction means 8 through the above cover member 120, the scattering of the debris and the gas can be effectively prevented and most of the debris can be advantageously sucked. It has also been found that by performing suction by the suction means 8 and the supply of the assist gas in combination, the ablation reaction is promoted to greatly reduce the area contaminated by the debris, etc.

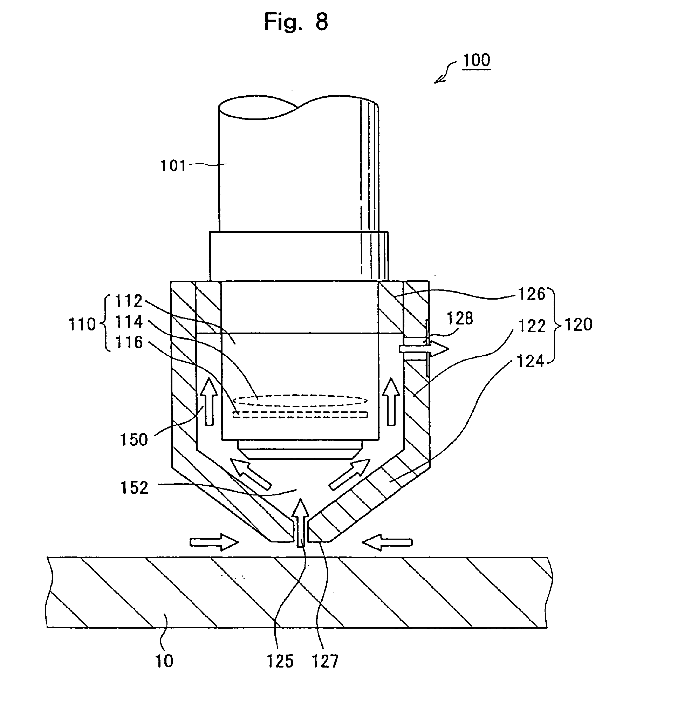

An embodiment shown in Figs. 1 to 6 has been described above. It has been found from the results of the above experiment B that the contaminated area can be halved without supply of the assist gas when the cover member 120 is fitted onto the condenser 110 to suck the atmosphere of the work area including the work point into the inside of the cover member 120 through the suction port 125. Fig. 8 shows the principal section of a laser beam processing head 100 which is constituted in such a manner that the guard member 130 in the embodiment shown in Figs. 1 to 6 is removed and the atmosphere of the work area including the work point is sucked into the inside of the cover member 120 through the suction port 125 of the cover member 120 fitted onto the condenser 110. Since the embodiment shown in Fig. 8 is substantially identical to the embodiment shown in Figs. 1 to 6 except that the above guard member 130 is removed, the same members are given the same reference symbols and their descriptions are omitted. In the embodiment shown in Fig. 8, the assist gas supply means 7 shown in Figs. 1 to 6 becomes unnecessary. Also in the embodiment shown in Fig. 8, unnecessary products such as debris produced by laser beam processing and gas are sucked into the inside of the cover member 120 through the suction port 125 together with the atmosphere of the work area including the work point while they are whirled as described above and discharged from the exhaust port 128. Since the unnecessary products such as debris produced by laser beam processing and gas are thus sucked into the inside of the cover member 120 through the suction port 125 while they are whirled, heavy debris flow along the inner wall of the suction port 125 by centrifugal force, whereby the debris do not intercept the laser beam applied from the condenser 110 and do not adhere to the protective glass 116 of the condenser 110.

While the present invention has been described based on the illustrated embodiments, the present invention is not limited to these embodiments and may be modified within the scope of the present invention. For example, in the above embodiments, the spiral groove 162 of the suction groove 160 formed in the end face 127 of the tapered portion 124 constituting the cover member 120 is formed to surround substantially half of the circumference of the suction port 125. The spiral groove 162 may be formed to surround the entire circumference of the suction port 125. In the above embodiments, the spiral groove 162 is formed in the end face 127 of the tapered portion 124. The spiral groove 162 may be formed not only in the end face 127 but also in the inner wall of the suction port 125. In the above embodiments, the number of the straight grooves 164 of the suction groove 160 is one. Two straight grooves may be formed symmetrical to the suction port 125, or a plurality of straight grooves may be formed radially.

## Claims

1. A laser beam processing machine comprising a chuck table having a holding surface for holding a workpiece, a laser beam application means having a condenser for applying a laser beam to the workpiece held on the chuck table, and a feed means for moving the chuck table and the laser beam application means in a feed direction relative to each other, wherein
the machine further comprises (1) a cover member which is arranged around the condenser and has a suction port at a position where a laser beam radiated from the condenser passes and an exhaust port in its body portion and (2) a suction means which is connected to the exhaust port of the cover member and sucks a gas produced at the time of laser beam processing through the suction port; and
the cover member is provided with a spiral flow generating means for giving a spiral flow to the gas sucked through the suction port.

2. The laser beam processing machine according to claim 1, wherein the spiral flow generating means comprises a spiral groove which is formed in the end face, to which the suction port is open, of the cover member to surround the edge of the outer periphery of the suction port and a straight groove which communicates with the spiral groove and reaches the edge of the outer periphery of the end face.

3. The laser beam processing machine according to claim 2, wherein the straight groove is formed in a direction substantially perpendicular to the feed direction.

4. A laser beam processing machine comprising a chuck table having a holding surface for holding a workpiece, a laser beam application means having a condenser for applying a laser beam to the workpiece held on the chuck table, and a feed means for moving the chuck table and the laser beam application means in a feed direction relative to each other, wherein
the machine further comprises (1) a cover member which is arranged around the condenser and has a suction port at a position where a laser beam radiated from the condenser passes and an exhaust port in its body portion, (2) a guard member which is arranged around the cover member and has an assist gas feed port in its body portion, (3) an assist gas supply means which is connected to the assist gas feed port of the guard member and supplies an assist gas into a space formed by the guard member and the cover member, and (4) a suction means which is connected to the exhaust port of the cover member and sucks the assist gas and a gas produced at the time of laser beam processing through the suction port; and
the cover member is provided with a spiral flow generating means for giving a spiral flow to the gas sucked through the suction port.

5. The laser beam processing machine according to claim 4, wherein the spiral flow generating means comprises a spiral groove formed in the end face, to which the suction port is open, of the cover member to surround the edge of the outer periphery of the suction port and a straight groove which communicates with the spiral groove and reaches the edge of the outer periphery of the end face.

6. The laser beam processing machine according to claim 5, wherein the straight groove is formed in a direction substantially perpendicular to the feed direction.
